# EUROPEAN PATENT APPLICATION

(11) **EP 4 579 558 A1**
(43) Date of publication of application: **02.07.2025**
(21) Application number: 23220505.4
(22) Date of filing: 28.12.2023
(51) Int. Cl.: G06Q 30/0202, G06Q 10/04, G06Q 30/0201, G06Q 10/087

(54) **PRODUCT SALES FORECASTING METHOD**

(71) Applicant: Nethansa sp. z o.o., 80-309 Gdansk (PL)
(72) Inventor: Rudek, Radoslaw, Wroclaw (PL); Kordan, Zbigniew, Sopot (PL); Marchlewski, Rafal, Gdansk (PL); Lejman, Michal, Gdansk (PL); Trepczyk, Lukasz, Gdansk (PL); Sikora, Rafal, Gdansk (PL); Treder, Michal, Sopot (PL); Trotsenko, Sergii, Gdansk (PL); Grandzicki, Arkadiusz, Gdansk (PL); Kowalski, Robert, Gdansk (PL); Grzelak, Michal, Elblag (PL); Lebioda, Mateusz, Elblag (PL); Czaja, Anna, Gdansk (PL); Knight, Anna, Gdansk (PL); Protasewicz, Piotr, Wroclaw (PL); Kapsa, Karolina, Katowice (PL); Chmielecki, Marcin, Suchy Dwor (PL)
(74) Representative: Wroblewski, Marcin Jan

(57) **Abstract**

The invention concerns a computer-implemented method for forecasting product sales that comprises the following consecutive steps: acquiring (10), from multiple sources, datasets comprising multiple parameters regarding product sales; preliminary processing (20) of the datasets during which the data are subjected to cleansing in order to eliminate technical errors, gaps and ambiguities; verifying and checking for anomalies (30) in the datasets based on business rules determining the permissible levels of data values and their relative proportions; generating (40) a product sales forecast that comprises multiple parameters concerning sales of the product in conditions of uncertainty by processing a dataset by means of a trained machine learning model based on the algorithm of extended Kalman filter comprising the ARIMAX model, where the generated product sales forecast comprises at least the predicted selling level and/or prices for the product; optimising (50) the generated product sales forecast comprising multiple parameters concerning product sales by processing the generated forecast by means of a trained machine learning model based on deep neural networks provided with adaptive approach to fine-tuning based on reinforcement learning; wherein the machine learning models are trained on the basis of benchmark data, and during optimisation (50) the algorithms of multi-criteria combinatorial optimisation are used.

## Description

### Technical field

The invention concerns a computer-implemented product sales method, in particular for forecasting sales on e-commerce platforms such as Amazon. The solution according to the invention can be applied for OPTIMISING the sale and purchase process carried out by entities selling on e-commerce platforms.

### Description of prior art

The tools that dominate today's e-commerce market, such as Helium10, Amalyze or Jungle Scout, are mostly founded on data analysis methods that are based on historic sales trends. Those systems, despite offering advanced analyses, show limitations in adapting to the dynamically changing market conditions.

Patent description CN113538055B discloses a method, device, processor and storage medium for forecasting product sales on Amazon. The method comprises acquiring the present stocks for each product on Amazon and the product sales rank in a pre-set time, defining the product sales volume based on the change in its stocks; entering the sales volume and the corresponding sales rank for multiple products into a prediction model based on regression analysis; specifying the parameter values of the polynomial regression equation included in the regression prediction model; acquiring the sales rank for the product to be forecast; entering the sales rank for the forecast product into a prediction model based on regression analysis in order to define the forecast product on the basis of the polynomial regression equation for exponential weighted moving average for the product; defining the formula for calculating the sales rank on Amazon; reverse engineering of the formula for calculating the sales rank in order to define the sales volume of the forecast product in a pre-set time based on the exponential weighted moving average for the forecast product.

US20030225635A1 discloses an inventory software that includes instructions to cause a programmable processor to receive inventory data relating to stock in an inventory; apply the inventory data to a conditional probabilistic predictive statistical algorithm where the statistical algorithm uses a conditional probabilistic model to process the data; calculate a predicted inventory level; and use the calculated predicted inventory level to determine whether to order additional stock for the inventory.

Patent application US20230186367A1 discloses a computer system that downloads historic transaction data linked to multiple users. The historic transaction data include data at the level of a single stock keeping unit (SKU). A computation system trains the first predictive model to identify transaction patterns for multiple users and relations between the items for each transaction based on historic transaction data. The computation system gets access to transaction data corresponding to the first among multiple users. The computation system generates another prediction model by fine-tuning the first prediction model based on the transaction data of the first user. The computer system receives inventory data corresponding to at least one seller with whom the first user made a transaction. The computer system gets access to an information channel to identify any upcoming or ongoing events. The other predictive model learns the basic pattern of expenditure made by the first user based on transaction data. The computer system recommends a new transaction for the first user based on the principal model of expenditure, inventory data, and information channel.

Patent application EP3874429A1 discloses a system comprising at least one computer and at least one storage device that stores instructions which, once executed by at least one computer, can cause that at least one computer executes operations that include: receiving an inventory dataset comprising a plurality of inventory variables that indicate at least historic stock levels, stock maintenance costs, supplier orders or lead times, wherein the plurality of inventory variables are characterised by having at least one future uncertainty level; processing the inventory dataset by means of a trained machine learning model to generate a prediction of a plurality of inventory variables that are characterised by at least one future uncertainty level, wherein the trained machine learning model has been trained on historic inventory datasets; and delivering a processed stock dataset to an optimisation algorithm, where the optimisation algorithm is used for predicting at least one stock management parameter that results in a specified probability of achieving the target service level while minimising the costs, and where the optimisation algorithm includes at least one limitation condition.

From patent description US11416779B2, we know a computer-implemented method comprising the use of at least one hardware processor for: receiving multiple data from multiple data sources; standardising multiple data; determining a standardised number of data with one or more company names; training a predictive model to predict an indicator for each of the one or more company names based on a standardised number of data determined with that company name and on historic measurements for that company name; and applying the predictive model to new data in order to predict the indicator for at least one of the one or more company names.

The existing algorithms are effective in stable conditions but become less effective when confronted with rapid market changes such as abrupt changes in trends, competitors introducing new products, or global occurrences. In addition, the present tools are often not flexible or advanced enough to effectively manage the inventory, considering the present and predicted market trends, nor do they adequately respond to external changes such as competitor prices or consumer reviews.

These limitations are the result of sub-optimal recommendations regarding stock management, which may cause over-storage or shortage of key products in critical moments. This is particularly troublesome in the rapidly changing e-commerce environment that is characterised by fast, dynamic variations and a high degree of uncertainty, and appropriate business decisions are a key to success.

The existing analytical systems are often based on conventional statistical methods and the analysis of historic sales data that are insufFicient for accurate forecasting in an environment where consumer behaviours and market conditions are unpredictable and subject to continuous change.

The solutions available on the market are characterised by insufFicient adaptation to fluctuating market conditions, as they are not adjusted to the rapidly changing trends, seasonability, or the impact of global events and other external factors, which directly influence the supply and demand. Those conventional methods are unable to effectively predict consumer behaviours that are increasingly complex and variable in the age of digitalisation and market globalisation.

Inaccuracy in optimising inventory and procurement processes due to having an imprecise sales prediction tool leads to inventory management problems, which in turn may cause a surplus or shortage of products, thus adversely affecting the operating efficiency and business profitability.

The purpose of the invention is to develop a method and system for predicting product sales that is capable of delivering more accurate sales trend forecasts, even in strongly non-linear cases caused by variable dependencies of supply and demand on external factors, suited to the current and expected market conditions, thus making it possible to effectively manage the inventory and optimise sales and purchase processes.

### The essence of the invention

The invention concerns a computer-implemented method for forecasting product sales that comprises the following consecutive steps:
a) acquiring, from multiple sources, datasets comprising multiple parameters regarding product sales;
b) preliminary processing of the datasets during which the data are subjected to cleansing in order to eliminate technical errors, gaps and ambiguities;
c) verifying and checking for anomalies in the datasets based on business rules determining the permissible levels of data values and their relative proportions;
d) generating a product sales forecast that comprises multiple parameters concerning sales of the product in conditions of uncertainty by processing a dataset by means of a trained machine learning model based on the algorithm of extended Kalman filter comprising the ARIMAX model, where the generated product sales forecast comprises at least the predicted selling level and/or prices for the product;
e) optimising the generated product sales forecast comprising multiple parameters concerning product sales by processing the generated forecast by means of a trained machine learning model based on deep neural networks provided with adaptive approach to fine-tuning based on reinforcement learning;
wherein the machine learning models are trained on the basis of benchmark data, and during optimisation the algorithms of multi-criteria combinatorial optimisation are used.

The benchmark data are used to illustrate particular situations/cases on the e-commerce market.

The method according to the invention is highly effective in analysing strongly non-linear cases that depend on external factors such as seasonability, fashion trends, or changes on a competitive market, which enables more accurate forecasting of sales trends.

Preferably, a meta-heuristic algorithm is used during optimisation that is based on the general particle swarm optimisation (PSMOC) technique.

Preferably, a meta-heuristic algorithm is used during optimisation that is based on the general NSGA-II technique.

Preferably, a meta-heuristic hybrid algorithm for optimising sales and purchase processes is used during optimisation that is based on the GreedyHeuristic algorithm for optimising sales and purchase processes and the related distribution of resources in conditions of uncertainty, and the RandomSwap method for searching solutions spaces.

Preferably, a hybrid algorithm is used during optimisation that is based on the SimulatedAnnealing meta-heuristic algorithm for optimising sales and purchase processes and the related distribution of resources, based on the simulated annealing technique, and the RandomSwap method for searching solutions spaces.

The method according to the invention comprises a step of generating recommendations related to the optimisation of sales and purchase process on the basis of a generated product sales forecast that comprises a plurality of parameters regarding product sales.

It is also reasonable that the data are standardised during the preliminary processing of datasets.

It is recommended that the datasets include, among other things, product purchase prices, product availability for distribution, product transaction prices, the quantities of products sold, information about the price, sales, rotation rate coupled with the product ranks on e-commerce platforms, information on the competition environment of the product, including the number of competitive offers, their price levels, share of the offers provided by the platform owner, competitor account scoring, and/or information about customer preferences depending on availability and purchasing logistics.

Preferably, the datasets are acquired from sources such as the sales systems of entities selling on e-commerce platforms, online sources and/or e-commerce platforms.

Preferably, the machine learning models used in steps d) and e) of the method according to the invention are regularly subjected to re-training every two weeks based on the set of historic data from the last 12 months.

In a preferred embodiment of the invention, a trained machine learning model for optimising the generated product sales forecast is configured for optimising the forecast in order to maximise product sales profit and/or minimise optimisation of the product sales time.

Preferably, the trained machine learning model for optimising the generated product sales forecast includes at least one limitation condition selected from a group covering the product sales time, minimum profit on sales, available budget, and limited inventory.

The invention further concerns a computer program comprising a program code for carrying out all steps of the computer-implemented method according to the invention, when said program is running on a computer.

The invention further concerns a readable medium that stores computer-implemented instructions performing all steps of the computer-implemented method according to the invention, executed on a computer.

The invention additionally concerns a computer system for implementing the method according to the invention, comprising at least one computer and at least one computer-readable medium that stores instructions performing all steps of the computer-implemented method according to the invention on at least one computer.

### Benefits of the invention

The solution according to the invention enables more accurate forecasting of sales trends, even in strongly non-linear cases caused by variable dependencies of supply and demand on external factors.

The solution according to the invention delivers an advanced analytical tool that allows precise forecasting of sales, suited to the current and expected market conditions, which makes it possible to effectively manage the inventory and optimise sales and purchase processes. The optimisation of sales and purchase processes enables flexible inventory management and avoiding the surplus or shortage of products. As a result, the solution according to the invention allows companies selling on e-commerce platforms to better adapt to the market reality by enhancing their competitiveness and profitability. Furthermore, the solution according to the invention allows eliminating the issue of selecting wrong products, which is typical of e-commerce market operators.

The solution according to the invention allows online sellers to better respond to rapidly changing market demands, thus minimising the risk of downtime in sales or the loss of income. The solution according to the invention provides the sellers with a tool that allows them to optimise their sales and stock strategies in a way that is considerably more effective and thought out. It allows, for example, for an optimum allocation of funds to maximise sales profit taking into account budget restrictions.

The higher effectiveness of sales forecasting supports the product ordering process and the decision-making processes related to investing in products, selecting sales channels, and optimising stocks.

### Description of drawing figures

The subject of the invention is presented in embodiments in a drawing, wherein:

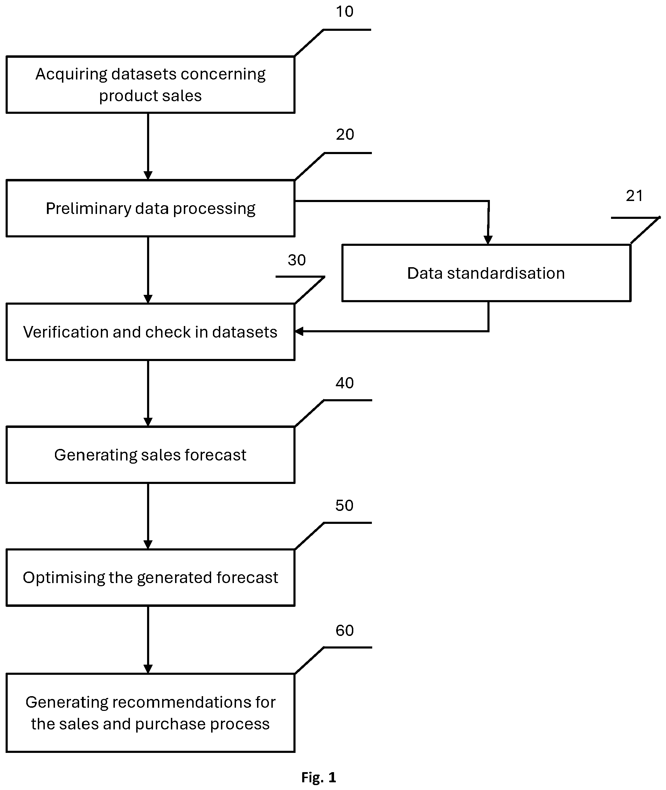

Fig. 1 shows schematically the sales forecasting method according to the invention.

### Notation and nomenclature

Some parts of the detailed description given below are presented as part of procedures, data processing steps or other symbolic representations of operations performed on binary data that can be executed in computer memory. Therefore, the logical steps are executed by a computer, which requires physical manipulation of physical quantities.

These quantities normally take the form of electric or magnetic signals that can be used to store, transmit, link, compare or otherwise manipulate data in a computer system. Given the use specified above, the data are defined as signals, time histories, bits, packages, messages, values, elements, symbols, signs, terms, numbers, or similar. In addition, all these or similar terms should be equated with the corresponding physical quantities and are the only convenient definitions for those physical quantities.

Terms such as "processing" or "creating" or "transmitting" or "executing" or "defining" or "detecting" or "receiving" or "selecting" or "calculating" or "generating" or similar refer to actions and processes carried out by a computer system that manipulates and converts data represented as physical (electronic) quantities in computer records and memories into other data similarly represented as physical quantities in memories or records or other stores of information. A computer-readable medium (memory) such as the one defined herein can normally be non-volatile and/or comprise a non-volatile device. In this context, a non-volatile storage medium can comprise a device that can be material, which means that the device has a particular physical form, even though it can change its physical state. Thus, for example, the term "non-volatile" refers to a device that remains material, even though it changes its state.

### Description of the invention

### Sales forecasting method

In the computer-implemented method for forecasting product sales according to the first embodiment, datasets are acquired 10 that comprise multiple parameters concerning product sales on the Amazon platform. The data include, among other things, product purchase prices, product availability for distribution, product transaction prices, the quantities of products sold, information about the price, sales and rotation rate, coupled with the product ranks on the Amazon platform, information on the competition environment of the product, including the number of competitive offers, their price levels, share of the offers provided by the owner of the Amazon platform, competitor account scoring, and/or information about customer preferences depending on availability and purchasing logistics. The data are acquired from the sales system of the entity selling its products on the Amazon platform for which the sales forecast is generated, and from the Amazon platform. In other embodiments, the data can also be acquired from other sources such as the Internet.

The collected data undergo preliminary processing 20 during which they are subjected to cleansing in order to eliminate technical errors, gaps and ambiguities. Then the collected data are verified and checked for anomalies 30 based on business rules determining the permissible levels of data values and their relative proportions.

In other embodiments of the method according to the invention, during the preliminary processing of datasets, the collected data are also subjected to standardisation 21.

Subsequently, a product sales forecast is generated 40 that comprises multiple parameters relating to product sales in conditions of uncertainty resulting from the rapidly changing e-commerce market. During forecasting, the collected data are processed by a trained machine learning model that is based on the algorithm of extended Kalman filter comprising the ARIMAX model, where the generated product sales forecast comprises at least the predicted selling level and prices for the product.

The generated product sales forecast undergoes optimisation 50 during which it is processed by various trained machine learning models based on deep neural networks provided with adaptive approach to fine-tuning based on reinforcement learning. The machine learning models used in the method according to the invention are subjected to re-training every two weeks based on the set of historic data from the last 12 months.

When implementing the method according to the invention, at the optimisation stage, at least one combinatorial optimisation algorithm is used from a group comprising at least:
- a meta-heuristic algorithm based on the general particle swarm optimisation (PSMOC) technique;
- a meta-heuristic algorithm based on the general NSGA-II technique;
- a meta-heuristic hybrid algorithm for optimising sales and purchase processes that is based on the GreedyHeuristic algorithm for optimising sales and purchase processes and the related distribution of resources in conditions of uncertainty, and the RandomSwap method for searching solution space;
- a SimulatedAnnealing meta-heuristic algorithm for optimising sales and purchase processes and the related distribution of resources, based on the simulated annealing technique, and the RandomSwap method for searching solution space.

The trained machine learning models for optimising the generated product sales forecast can have different configurations. They can be configured for optimising the forecast in order to maximise product sales profit and/or minimise optimisation of the product sales time.

In addition, the trained machine learning models for optimising the generated product sales forecast include at least one limitation condition selected from a group covering the product sales time, minimum profit on sales, available budget, and limited stocks.

In other embodiments of the method according to the invention, on the basis of the generated product sales forecast comprising multiple parameters concerning product sales, after the optimisation process, recommendations are generated 60 for optimising the sales and purchase process.

### Computer program

A computer program comprising a program code for carrying out all steps of the computer-implemented method according to the invention when said program is running on a computer.

### Computer-readable data medium

A computer-readable medium that stores computer-implemented instructions performing all steps of the computer-implemented method according to the invention, implemented on a computer.

### System for implementing sales forecasting method

The computer system for implementing the method according to the invention comprises at least one computer and at least one computer-readable medium that stores instructions performing all steps of the computer-implemented method on at least one comput

## Claims

1. A computer-implemented method for forecasting product sales that comprises the following consecutive steps:
a) acquiring (10), from multiple sources, datasets comprising multiple parameters regarding product sales;
b) preliminary processing (20) of the datasets during which the data are subjected to cleansing in order to eliminate technical errors, gaps and ambiguities;
c) verifying and checking for anomalies (30) in the datasets based on business rules determining the permissible levels of data values and their relative proportions;
d) generating (40) a product sales forecast that comprises multiple parameters concerning sales of the product in conditions of uncertainty by processing a dataset by means of a trained machine learning model based on the algorithm of extended Kalman filter comprising the ARIMAX model, where the generated product sales forecast comprises at least the predicted selling level and/or prices for the product;
e) optimising (50) the generated product sales forecast comprising multiple parameters concerning product sales by processing the generated forecast by means of a trained machine learning model based on deep neural networks provided with adaptive approach to fine-tuning based on reinforcement learning;
wherein the machine learning models are trained on the basis of benchmark data, and during optimisation (50) the algorithms of multi-criteria combinatorial optimisation are used.

2. The method according to claim 1, **characterised in that** a meta-heuristic algorithm is used during optimisation (50) that is based on the general particle swarm optimisation (PSMOC) technique.

3. The method according to claim 1 or 2, **characterised in that** a meta-heuristic algorithm is used during optimisation (50) that is based on the general NSGA-II technique.

4. The method according to any of claims 1 to 3, **characterised in that** a meta-heuristic hybrid algorithm for optimising sales and purchase processes is used during optimisation (50) that is based on the GreedyHeuristic algorithm for optimising sales and purchase processes and the related distribution of resources in conditions of uncertainty, and the RandomSwap method for searching solutions spaces.

5. The method according to any of claims 1 to 4, **characterised in that** a hybrid algorithm is used during optimisation (50) that is based on the SimulatedAnnealing meta-heuristic algorithm for optimising sales and purchase processes and the related distribution of resources, based on the simulated annealing technique, and the RandomSwap method for searching solution space.

6. The method according to any of claims 1 to 5, **characterised in that** it comprises a step of generating (60) recommendations related to the optimisation of sales and purchase process on the basis of a generated product sales forecast that comprises a plurality of parameters regarding product sales.

7. The method according to any of claims 1 to 6, **characterised in that** the data are standardised during the preliminary processing (20) of datasets.

8. The method according to any of claims 1 to 7, **characterised in that** the datasets include, without limitation, product purchase prices, product availability for distribution, product transaction prices, the quantities of products sold, information about the price, sales and rotation rate, coupled with the product ranks on e-commerce platforms, information on the competition environment of the product, including the number of competitive offers, their price levels, share of the offers provided by the platform owner, competitor account scoring, and/or information about customer preferences depending on availability and purchasing logistics.

9. The method according to any of claims 1 to 8, **characterised in that** the datasets are acquired from sources such as the sales systems of entities selling on e-commerce platforms, online sources and/or e-commerce platforms.

10. The method according to any of claims 1 to 9, **characterised in that** the machine learning models used in steps d) and e) are regularly subjected to re-training every two weeks based on the set of historic data from the last 12 months.

11. The method according to any of claims 1 to 10, **characterised in that** a trained machine learning model for optimising the generated product sales forecast is configured for optimising the forecast in order to maximise product sales profit and/or minimise optimise product sales time.

12. The method according to any of claims 1 to 11, **characterised in that** the trained machine learning model for optimising the generated product sales forecast includes at least one limitation condition selected from a group covering the product sales time, minimum profit on sales, available budget, and limited stocks.

13. A computer program comprising a program code for carrying out all steps of the computer-implemented method according to any of claims 1 to 12 when said program is running on a computer.

14. A computer-readable medium storing computer-implemented instructions performing all steps of the computer-implemented method according to any of claims 1 to 12, implemented on a computer.

15. The computer system for implementing the method according to any of claims 1 to 12, comprising at least one computer and at least one computer-readable medium storing instructions performing all steps of the computer-implemented method according to any of claims 1 to 12 on at least one computer.
